# EUROPÄISCHE PATENTSCHRIFT

(11) **EP 0 158 857 B1**
(45) Veröffentlichungstag und Bekanntmachung des Hinweises auf die Patenterteilung: **17.08.1988**
(21) Anmeldenummer: 85103339.9
(22) Anmeldetag: 22.03.1985
(51) Int. Cl.: C09B 62/002, C09B 19/00, D06P 3/66, D06P 3/10

(54) **Reaktive Dichlorotriphendioxazinfarbstoffe**
Reactive dichlorotriphenyldioxazin dyes
Colorants réactifsde la serie de dichlorotriphinyldioxazines

(30) Priorität: 03.04.1984 DE 3412333
(43) Veröffentlichungstag der Anmeldung: 23.10.1985
(73) Patentinhaber: BAYER AG, 51368 Leverkusen (DE)
(72) Erfinder: Harms, Wolfgang, Dr., D-5090 Leverkusen (DE); Wunderlich, Klaus, Dr., D-5090 Leverkusen (DE)

(56) Entgegenhaltungen:
- EP-A- 0 024 668
- DE-A- 2 503 611
- FR-A- 2 297 232

## Beschreibung

Gegenstand der vorliegenden Erfindung sind Farbstoffe der Formel 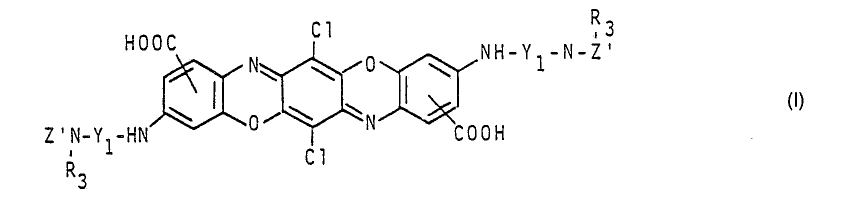 worin
Y₁ = gegebenenfalls durch O, S, SO₂ oder N unterbrochenes C₂-C₆-Alkylen
Z' = faserreaktiver Fluor- oder Chlor-1,3-5-triazinyl- oder Fluor-pyrimidinyl-Rest
R₃ = H, gegebenenfalls durch OH, COOH oder C₁-C₂₇Alkoxy substituiertes C₁-C₄-Alkyl, insbesondere Farbstoffe der Formel

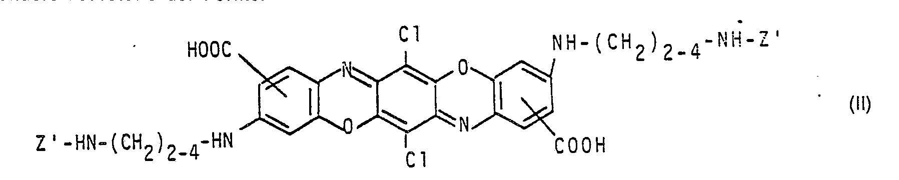

Bevorzugt sind dabei Farbstoffe der Formeln und II mit Z' = Fluor- oder Chlor-1,3,5-triazinylrest, der als weiteren Substituenten eine gegebenenfalls durch Alkyl- oder Arylreste substituierte Aminogruppe aufweist.

Gegenstand der Erfindung ist auch die Verwendung der erfindungsgemäßen Farbstoffe zum Färben von hydroxyl- oder amidgruppenhaltigen Fasermaterialien.

Gegenstand der Erfindung sind weiterhin mit den erfindungsgemäßen Farbstoffen gefärbte hydroxyl-oder amidgruppenhaltige Fasermaterialien.

Geeignete Brückenglieder Y₁ sind beispielweise Ethylen, 1,2- und 1,3-Propylen, 1,2-, 1,3-, 1,4- und 2,4-Butylen, 2-Methyl-1,3-Propylen, 2,2-Dimethylpropylen, 2-Methyl-2,4₋pentylen, 2,5-Hexylen, 1,5-Pentylen, 1,6-Hexylen, ―CH₂―CH₂―O―CH₂―CH₂― ―CH₂―CH₂―S―CH₂―CH₂―, ―CH₂―CH₂-SO₂―CH₂―CH₂― ―CH₂―CH₂―NH―CH₂―CH₂― ―CH₂―CH₂―N(CH₃)―CH₂―CH₂-.

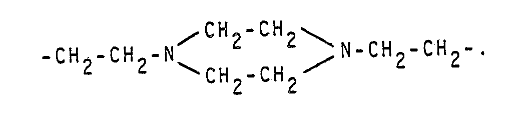

Geeignete Fluor- bzw. Chlor-1,3,5-triazinylreste sind beispielsweise 2,4-Dichlortriazinyl-6-, 2-Amino-4-chlortriazinyl-6-, 2-Alkylamino-4-chlortriazinyl-6-, wie 2-Methylamino-4-chlortriazinyl-6, 2-Ethylamino-oder 2-Propylamino-4-chlortriazinyl-6-, 2-ß-Oxethylamino-4-chlortriazinyl-6-, 2-Di-ß-oxethylamino-4-chlor- triazinyl-6- und die entsprechenden Schwefelsäurehalbester, 2-Diethylamino-4-chlortriazinyl-6-, 2-Morpholino- oder 2-Piperidino-4-chlortriazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6-, 2-(o-, m- oder p-Carboxy- oder -Sulfophenyl)-amino-4-chlortriazinyl-6-, 2-(2',4'-, 2',5'- oder 3',4'-Disulfophenyl)-amino-4-chlor- triazinyl-6, 2-Alkoxy-4-chlortriazinyl-6-, wie 2-Methoxy- oder -Ethoxy-4-chlortriazinyl-6-, 2-(Phenyl-sulfo- nylmethoxy)-4-chlortriazinyl-6-, 2-Aryloxy- und substituiertes Aryloxy-4-chlortriazinyl-6-, wie 2-Phenoxy-4- chlortriazinyl-6-, 2-(p-Sulfophenyl)-oxy-4-chlortriazinyl-6-, 2-(o-, m- oder p-Methyl- oder -Methoxyphenyl)-oxy-4-chlor-triazinyl-6-, 2-Alkylmercapto- oder 2-Arylmercapto- oder 2-(substituiertes Aryl)-mercapto-4- chlortriazinyl-6-, wie 2-ß-Hydroxyethylmercapto-4-chlortriazinyl-6-, 2-Phenylmercapto-4-chlortriazinyl-6-, 3-(4'-Methylphenyl)-mercapto-4-chlortriazinyl-6-, 2-(2',4'-Dinitro)-phenyl-mercapto-4-chlortriazinyl-6-, 2-Methyl-4-chlortriazinyl-6-, 2-Phenyl-4-chlortriazinyl-6, 2,4-Difluortriazinyl-6-, Monofluortriazinylreste, die durch Amino-, Alkylamino-, Aralkylamino, Arylaminogruppen substituiert sind, wobei Alkyl, insbesondere gegebenenfalls substituiertes C₁-C₄-Alkyl, Aryl, insbesondere gegebenenfalls durch Sulfo, Alkyl-, insbesondere C₁-C₄-Alkyl, Alkoxy-, insbesondere C₁-C₄-Alkoxy-, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6, 2-Methylamino-4-fluor-triazinyf-6, 2-Ethylamino-4-fluor-triazinyl-6, 2-iso-Pro- pylamino-4-fluor-triazinyl-6, 2-Dimethylamino-4-fluor-triazinyl-6, 2-Diethylamino-4-fluor-triazinyl-6, 2-ß-Methoxy-ethyl-amino-4-fluor-triazinyl-6, 2-ß-Hydroxy-ethylamino-4-fluor-triazinyl-6, 2-Di-(ß-hydroxyethyl-amino)-4-fluortriazinyl-6, 2-ß-Sulfoethylamino-4-fluor-triazinyl-6, 2-ß-Sulfoethyl-methylamino-4-fluor-triazinyl-6, 2-Carboxymethylamino-4-fluor-triazinyl-6, 2-ß-Cyanethylamino-4-fluor-triazinyl-6, 2-Benzylamino-4-fluor- triazinyl-6, 2-ß-Phenylethylamino-4-fluor-triazinyl-6, 2-Benzyl-methylamino-4-fluor-triazinyl-6, 2-(x-Sulfo- benzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor -triazinyl-6, 2-(o-, m-, p-Chlorphenyl)-amino-4-fluor-triazinyl-6, 2-(o-, m-, p-Methoxyphenyl)-4-fluor-triazinyl-6, 2-(2'-Methyl-4'-suifophenyl)-amino-4-fluor-triazinyl-6, 2-(2'-Methyl-5'-sulfophenyl)-amino-4-fluor- triazinyl-6, 2-(2'-Chlor-4'-sulfophenyl)-amino-4-fluor-triazinyl-6, 2-(2'-Chlor-5'-sulfophenyl)-amino-4-fluor- triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4-sulfophenyl)-amino-4-fluor-triazinyl-6, 2-(6'-Sulfonaphthyl-(2'))-amino-4-fluor-triazinyl-6, 2-(4',8'-Disulfonaphthyi-(2'))-amino-4-fluor-triazinyl-6, 2-(6',8'-Disulfonaphthyl-(2'))-amino-4-fluor- triazinyl-6, 2-(N-Methylphenyl)-amino-4-fluor-triazinyl-6, 2-(N-ethylphenyl)-amino-4-fluor-triazinyl-6, 2-(N-ß-Hydroxyethylphenyl)-amino-4-fluor-triazinyl-6, 2-(N-iso-Propylphenyl)-amino-4-fluor-triazinyl-6, 2-Mor- pholino-4-fluor-triazinyl-6, 2-Piperidino-4-fluor-triazinyl-6, 2-(4',6',8'-Trisulfonaphthyl-(2'))-4-fluor-triazinyl-6, 2-(3',6',8'-Trisulfonaphthyl-(2'))-4-fluor-triazinyl-6, 2-(3',6'-Disulfonaphthyl-(1'))-4-fluor-triazinyl-6, 2-Chlor-oder2-Fluor-4-(4'-ß-sulfatoethylsulfonyl-phenyl-amino)-6-triazinyl, 2-Chlor-oder2-Fluor-4-(3'-ß-sulfa- toethylsulfonyl-phenylamino)-6-triazinyl, 2-Chlor- und 2-Fluor-4-(ß-(ß'-sulfatoethylsulfonyl)-ethylamino)-6-triazinyl, 2-Fluor-4-bis-(ß-(ß'-chlorethylsulfonyl)-ethyl)-amino-6-triazinyl.

Die Halogentriazinylreste können auch mit einem zweiten Halogentriazinylrest verknüpft sein. Beispiele für derartige Reste sind die folgenden :

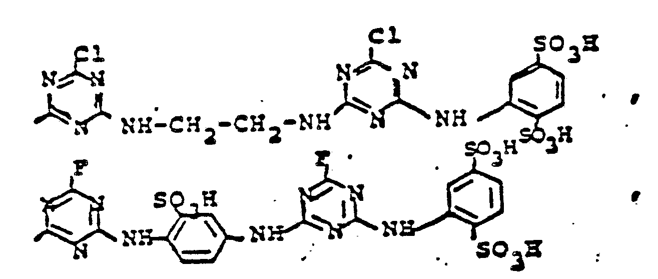

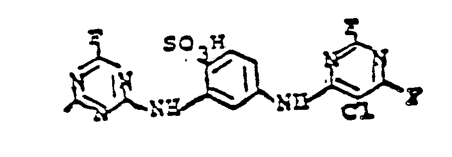

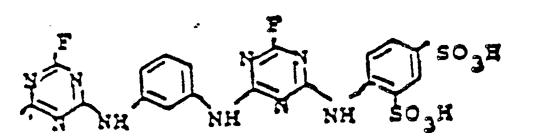

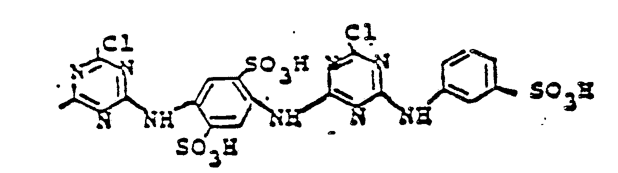

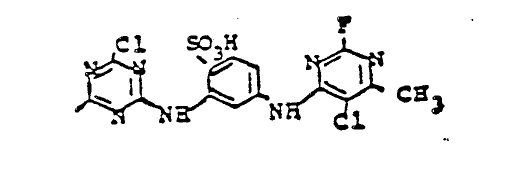

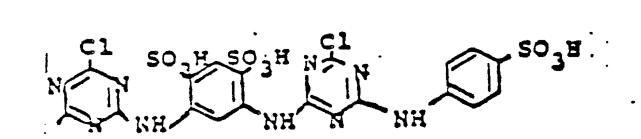

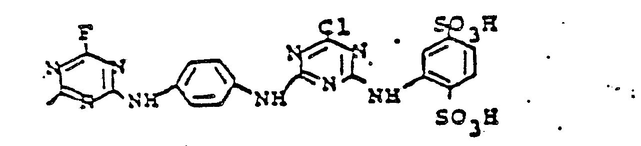

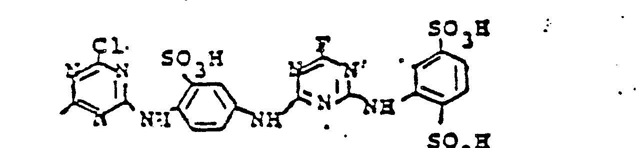

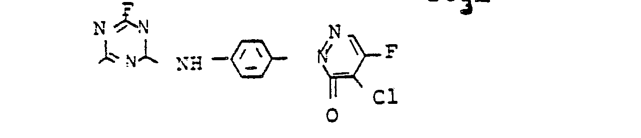

Geeignete Fluorpyrimidinylreste sind beispielsweise 2-Fluor-4-pyrimidinyl-, 2,6-Difluor-4-pyrimidinyl-, 2,6-Difluor5-chlor-4-pyrimidinyl, 2-Fluor-5,6-dichlor-4-pyrimidinyl-, 2,6-Difluor-5-methyl-4-pyrimidinyl-, 2-Fluor-5-methyl-6-chlor-4-pyrimidinyl₋, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trif!uor-4-pyrim!dinyi-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2 fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Ftuor-5-carbonamido-4-pyrim)dinyi-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor 6-carbomethoxy-4-pyrimidinyl-, 2-Fluor-6-phenyl-4-pyrimidinyl-, 2-Fluor-6-cyan-4-pyrimidinyl-, 2-Fluor-4-dichlormethyl-5-chlorpyrimidin-6-yl, 2-Fluor-5-chlor-pyrimidin-4-yl, 2-Methyl-4-fluor-5-methylsulfonylpyrimidinyl-6, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl. Geeignete sulfonylgruppenhaltige Triazinreste sind 2-(3'-carboxyphenyl)-sulfonyl-4-chlortriazinyl-6-, 2-(3'-Sulfophenyl)-sulfonyl-4-chlortriazinyl-6-.

Von den Farbstoffen der Formel (I) sind generell solche bevorzugt, bei denen die COOH-Gruppen am Triphendioxazinsystem in o-Stellung zu den Gruppierungen 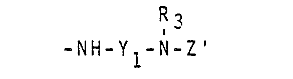 stehen.

Im Rahmen der Erfindung sind besonders bevorzugt Farbstoffe mit Z' = Fluor- oder Chlor-1,3,5-triazinylrest, der als weitere Substituenten eine gegebenenfalls durch Alkyl- oder Arylreste substituierte Aminogruppe, eine Alkoxy- oder Aryloxygruppe aufweist.

Farbstoffe der Formel (I) werden in an sich bekannter Weise erhalten durch Umsetzung von Verbindungen der Formel 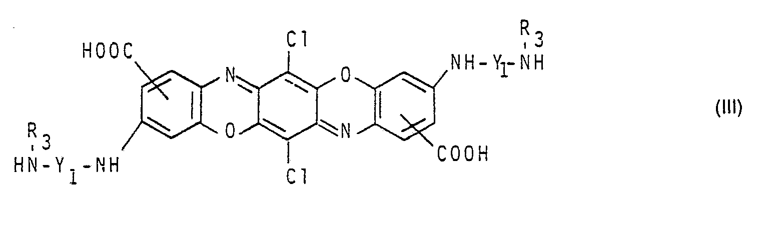 mit Reaktivkomponenten der Formel
Z'-Halogen (IV)

worin Z' die oben angegebene Bedeutung hat und Halogen für F, CI oder Br steht.

Die Kondensation der Dioxazin-Verbindungen der Formel (111) und der Reaktivkomponenten (IV) wird entweder in wäßrigem oder wäßrig-organischem Medium in Abhängigkeit von der eingesetzten Reaktivkomponente bei Temperaturen von 0-80 °C und pH-Werten von 3-9 in Gegenwart alkalischer Kondensationsmittel wie wäßriger Alkalihydrogencarbonat-, Alkalicarbonat-, Alkalihydroxid-, Alkalihydrogenphosphat-, Dialkalihydrogen-phosphat- oder Trialkaliphosphat-Lösung durchgeführt, oder aber die Kondensation wird in aprotischen organischen Lösungsmitteln wie Toluol, Halogenbenzolen, Nitrobenzol, Dimethylformamid, N-Methylpyrrolidon, Tetramethylensulfon, Dimethylsulfoxid, Aceton, Methylethylketon gegebenenfalls in Gegenwart aprotischer organischer Basen wie Trialkylaminen, N,N-Dialkylanilinen, Pyridin oder Alkylpyridinen bei Temperaturen von 0-80 °C vollzogen.

Die Herstellung von Verbindungen der Formel (III) erfolgt nach an sich bekannten Methoden durch Kondensation von 1,4-Benzochinonen der Formel 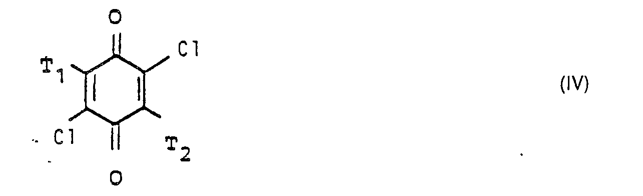 worin T₁ und T₂ Wasserstoff, CI, Br, OAlkyl oder OAryl bedeuten, mit Aminobenzoesäuren der Formel 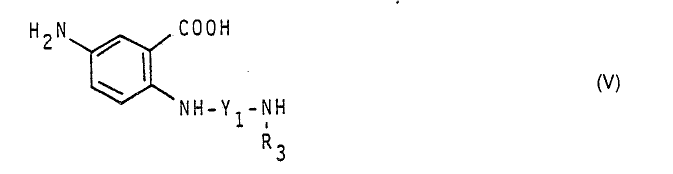 zu Verbindungen der Formel 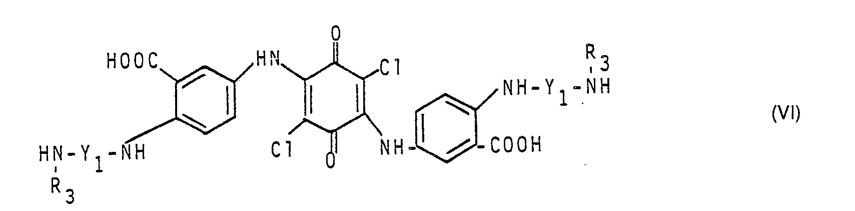 und nachfolgenden Ringschluß der Chinonverbindungen (VI) zu den Dioxazin-Farbbasen (III).

Die Kondensation der Benzochinone (IV) mit den Aminobenzoesäuren (V) zu den Verbindungen (III) erfolgt am besten in wäßrigem oder wäßrig-organischem Medium unter Zugabe alkalischer Kondensationsmittel bei pH-Werten von 3-11, vorzugsweise 4-8, und Temperaturen von 20-90 °C, vorzugsweise von 40-70 °C oder in gepufferten Lösungen, die obige alkalische Kondensationsmittel enthalten. Man kann auch in rein organischem Milieu unter Zusatz säurebindender Mittel arbeiten.

Alkalische Kondensationsmittel sind beispielsweise Natriumhydrogencarbonat. Natriumcarbonat, Natrium- oder Kaliumacetat, Natronlauge, Kalilauge, Natriumphosphate, Natriumborat.

Im allgemeinen fallen die Kondensationsprodukte der Formel (VI) als schwerlösliche, braune Produkte aus.

Die eingesetzten Aminobenzoesäuren der Formel (V) sind beispielsweise erhältlich aus 2-Chlor-5-nitrobenzoesäure durch Kondensation mit Ammoniak, substituierten Alkyl- oder Arylaminen, substituierten Alkoholen oder Phenolen, substituierten Alkyl- oder Arylmercaptanen und anschließende Reduktion der Nitrogruppe.

Eine Variante zur Herstellung von Verbindungen der Formel (VI) besteht in der Addition von Aminobenzoesäuren der Formel (V) an 1,4-Benzochinone der Formel 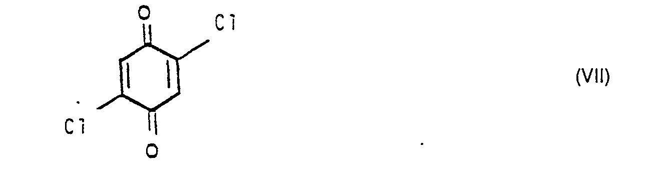 und der Oxidation der primär entstehenden Addukte.

Der Ringschluß der Chinonkondensationsprodukte (VI) kann nach an sich bekannten Methoden, wie sie in den Deutschen Offenlegungsschriften 2122262, 2124080, 2302382, 2344781, 2503611, 2 823 828 und in der Britischen Patentschrift 2 019 872 erwähnt sind, insbesondere in konzentrierter Schwefelsäure und vor allem in Oleum mit S0₃-Gehalten von 1-50 % bei Temperaturen von 10-80 °C gegebenenfalls mit Zusatz von Oxydationsmitteln wie Kalium- oder Ammoniumperoxidisulfat oder organischen Peroxiden vorgenommen werden.

Die angegebenen Formeln sind die der freien Säuren. Im allgemeinen fallen die Farbstoffe bei der Herstellung in Form ihrer Salze, insbesondere der Li-, Na- oder K-Salze an und werden auch in dieser Form verwendet.

Die nicht-reaktiven Farbstoffe finden bevorzugt Verwendung zur Herstellung der Reaktivfarbstoffe.

Die neuen Farbstoffe im bevorzugten Nuancenbereich blau sind wertvolle Produkte, die sich durch hohe Farbstärken auszeichnen. Sie eignen sich in gelöster oder dispergierter Form für die verschiedensten Anwendungszwecke.

In Form wasserlöslicher Verbindungen finden sie bevorzugtes Interesse für das Färben hydraxyl- und amidgruppenhaltiger Textilmaterialien, insbesondere von Materialien aus nativer und regenerierter Cellulose sowie synthetischen Polyamid- und Polyurethanfasern, Wolle und Seide.

Handelt es sich um wasserlösliche Reaktivfarbstoffe, so werden die genannten Materialien nach den für Reaktivfarbstoffe allgemein bekannten und üblichen Verfahren gefärbt oder bedruckt. Man erhält dann licht- und naßechte bevorzugt blaue Färbungen und Drucke.

Bei Temperaturangaben in den Beispielen handelt es sich um °C. Die Formeln der wasserlöslichen Farbstoffe in der Beschreibung und in den Beispielen sind die der freien Säuren.

Die in den Beispielen angegebenen Farbkennzahlen beziehen sich auf Color Index Hue Indication Chart (Indicator Numbers).

In der DE-A 2503611 werden Triphendioxazin-Reaktivfarbstoffe beschrieben, die neben Sulfogruppen prinzipiell auch Carboxygruppen im Triphendioxazinring enthalten können, wobei jedoch für den Fall, daß der Triphendioxazinring frei von Sulfogruppen ist, das die Reaktivgruppe tragende Brückenglied zwingend eine Sulfogruppen tragen muß.

### Beispiel 1

12,4 g 2-Aminobenzol-1,4-disulfonsäure werden in 50 ml Wasser durch Zutropfen von 10 %iger Sodalösung und Einstellen eines pH-Wertes von 5,5 gelöst. Man läßt nach Abkühlen der Lösung auf 0-5° 5,0 ml Cyanurfluorid innerhalb von 5 Minuten zutropfen, hält den pH-Wert mittels 10 %iger Sodalösung auf 4,5-4,7 und rührt zur Beendigung der Kondensation noch 20 Minuten under den angegebenen Bedingungen weiter.

9,1 g einer Dioxazincarbonsäure der Formel, 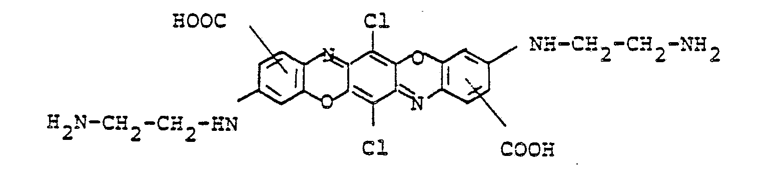 hergestellt durch Kondensation von 2,3,5,6-Tetrachlorchinon mit 5-Amino-2-(ß-aminoethylamino)-benzoesäure und anschließenden oxydativen Ringschluß des Kondensationsproduktes in Oleum, werden in 250 ml Wasser durch Zugabe von 2n Natronlauge bei pH 12,0 gelöst.

Die Lösung der Reaktivkomponente und des Farbkörpers werden nun in 50 ml vorgelegtes Wasser bei 0-5° gleichzeitig so eingetropft, daß sich im Reaktionsgemisch ein pH-Wert von 9,0 einstellt und beide Lösungen in etwa 15-30 Minuten gleichzeitig eingetragen sind. Die entstehende Lösung wird zur Beendigung der Kondensation einige Stunden bei 0-5° mit 1 n Natronlauge weiter auf pH 8,8-9,0 gehalten. Man läßt die Temperatur anschließend unter ständiger pH-Kontrolle über Nacht auf 20° ansteigen, stellt den pH-Wert mit einigen Tropfen verdünnter Salzsäure auf 7,5 und salzt den Farbstoff mit 22% Natriumchlorid aus. Die erhaltene Fällung wird abgesaugt, mit 20%iger Natriumchloridlösung gewaschen und der Filterkuchen nach Zusatz von Phosphaten als Puffer bei 50° im Vakuum getrocknet. Der erhaltene Farbstoff entspricht in Form der freien Säure der Formel 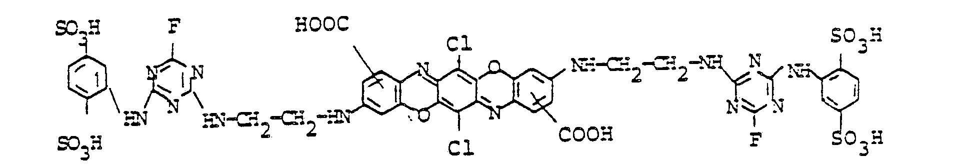 und färbt Cellulosefasern nach den bekannten Färbe- und drucktechniken in kräftigen Blautönen (C.I. Indicator Number 14). Aₘₐₓ = 613 nm.

### Beispiel 2

7,8 g 2-Aminobenzolsulfonsäure werden in 100 ml Wasser bei pH 5,0 durch Zutropfen von 10 %iger Sodalösung gelöst. Zu der auf 0-5° abgekühlten Lösung läßt man in 5 Minuten 4,4 ml Cyanurfluorid zutropfen und hält den pH-Wert mit 10%iger Sodalösung auf 4,2-4,7. Man rührt zur Beendigung der Kondensation noch 20 Minuten nach. Es entsteht eine teilweise Fällung des Kondensationsproduktes. 8,4 g Dioxazincarbonsäure der Formel 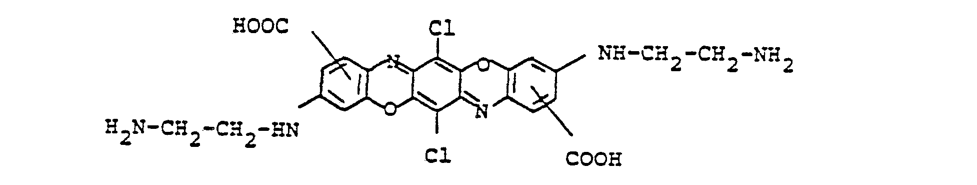 werden in 320 ml Wasser bei pH 12,0 und 50° gelöst.

Die Suspension der Reaktionskomponente und die Lösung des Farbkörpers werden nun in 150 g vorgelegtes Gemisch von Eis und Wasser gleichzeitig in gleichen Anteilen eingetragen. Im Reaktionsgemisch wird mit 15 %iger Sodalösung ein pH-Wert von 9,0 gehalten. Man rührt nun bei diesem pH-Wert 2 Stunden bei 0-5° nach und läßt dann die Temperatur auf 20° über Nacht unter ständiger pH-Kontrolle ansteigen. Man stellt die erhaltene Lösung mit einigen ml 10 %iger Salzsäure auf pH 7,0. Der Farbstoff wird durch langsame Zugabe von 150 g Natriumchlorid ausgesalzen, die Fällung abgesaugt und der Filterkuchen mit 15 %iger Natriumchloridlösung gewaschen. Nach Zusatz von einigen Prozent Phosphaten als Puffer wird das Produkt bei 50° im Umluftschrank getrocknet. Der erhaltene Farbstoff entspricht in Form der freien Säure der Formel

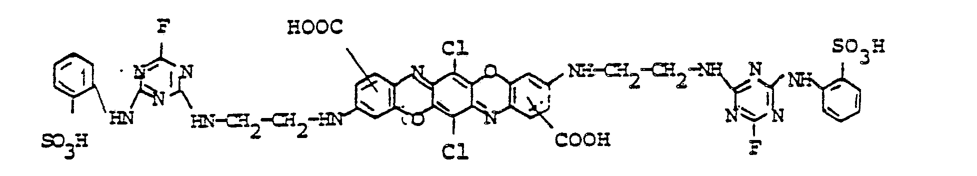

Er färbt Baumwolle aus langer Flotte nach den üblichen Methoden in kräftigen Blautönen (C.J. Indicator Number 14). Aₘₐₓ = 624 nm.

### Beispiel 3

9,7 g 3-Aminobenzolsulfonsäure werden in 80 ml Wasser suspendiert und mittels 15 %iger Sodalösung der pH-Wert auf 3,5 gestellt. Man läßt nun bei 0-5° 5,5 ml Cyanurfluorid zutropfen und hält den pH-Wert mit Sodalösung auf 3,2-3,5. Durch eine Nachrührzeit von 15 Minuten führt man die Kondensation zu Ende.

Man setzt nun diese Lösung mit einer Lösung von 8,4 g der Dioxazin-Farbkomponente aus Beispiel 2 in 320 ml Wasser in der gleichen Weise um, wie im Beispiel 2 beschrieben und erhält nach entsprechender Aufarbeitung einen Farbstoff der Formel 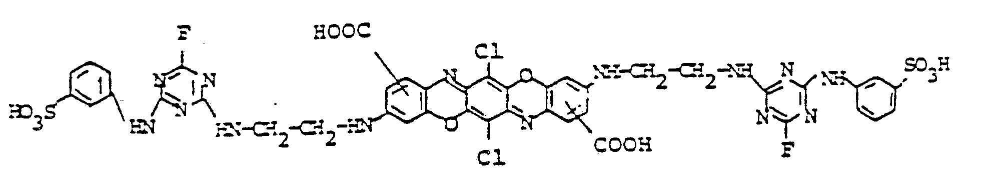 der zum Färben und Bedrucken von Cellulosefasern in blauen Tönen (C.J. Indicator Number 14) ebenfalls geeignet ist. ^{λ}maX = 620 nm.

Weitere ähnliche Cellulosefasern in blauen Tönen (C.J. Indicator Number 14) färbende Reaktivfarbstoffe erhält man, wenn man die nachstehend beschriebenen Triphendioxazincarbonsäuren (lll) mit den aufgeführten Reaktivkomponenten (IV) kondensiert.

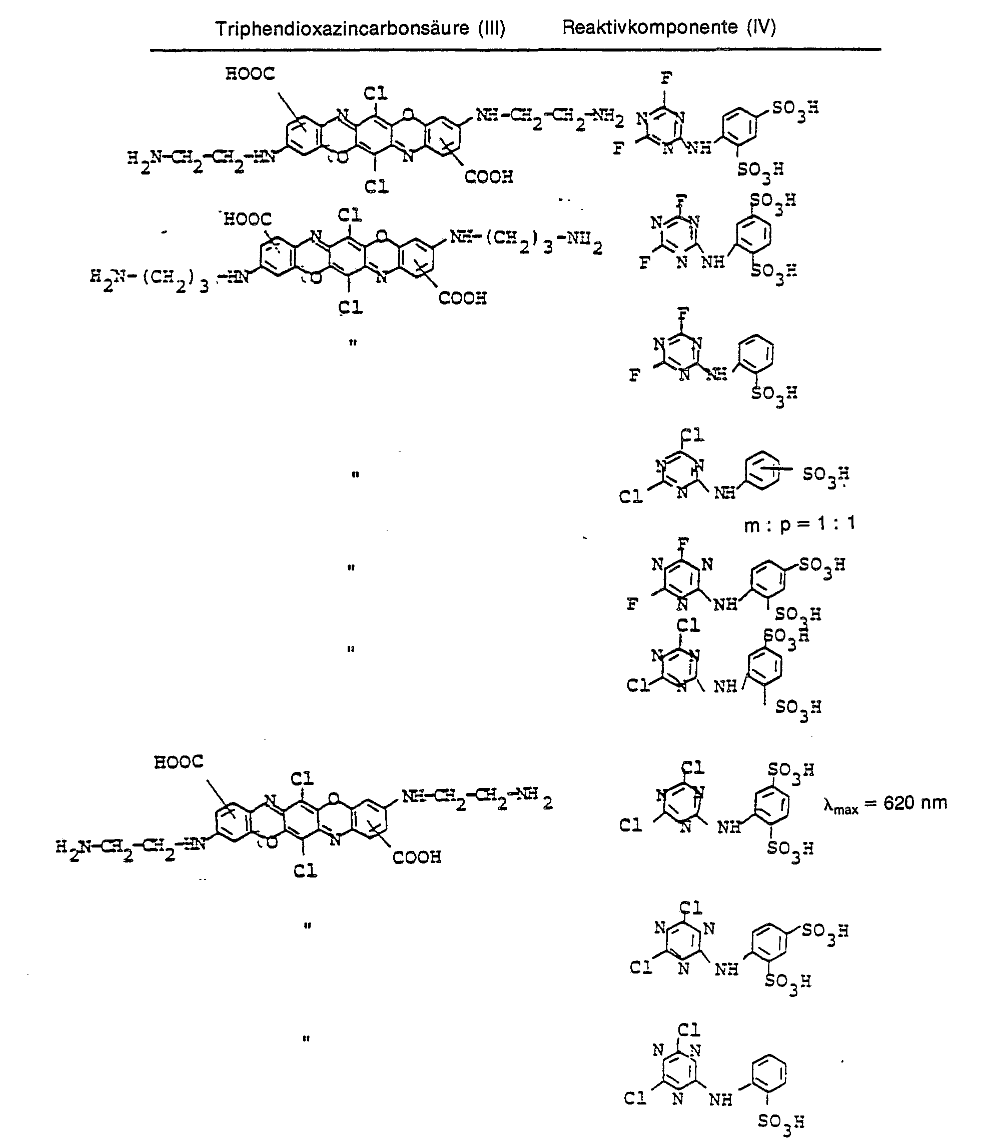

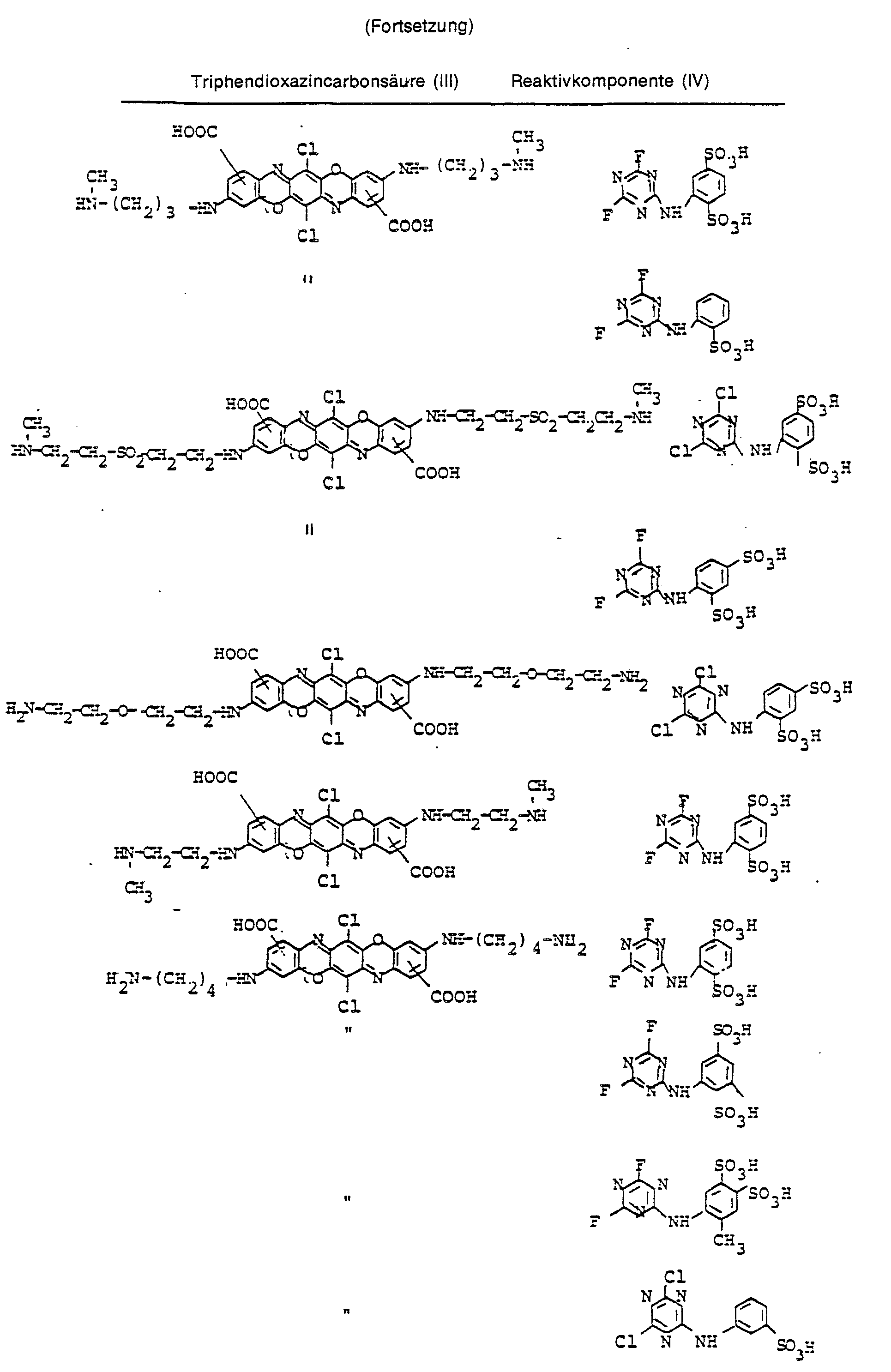

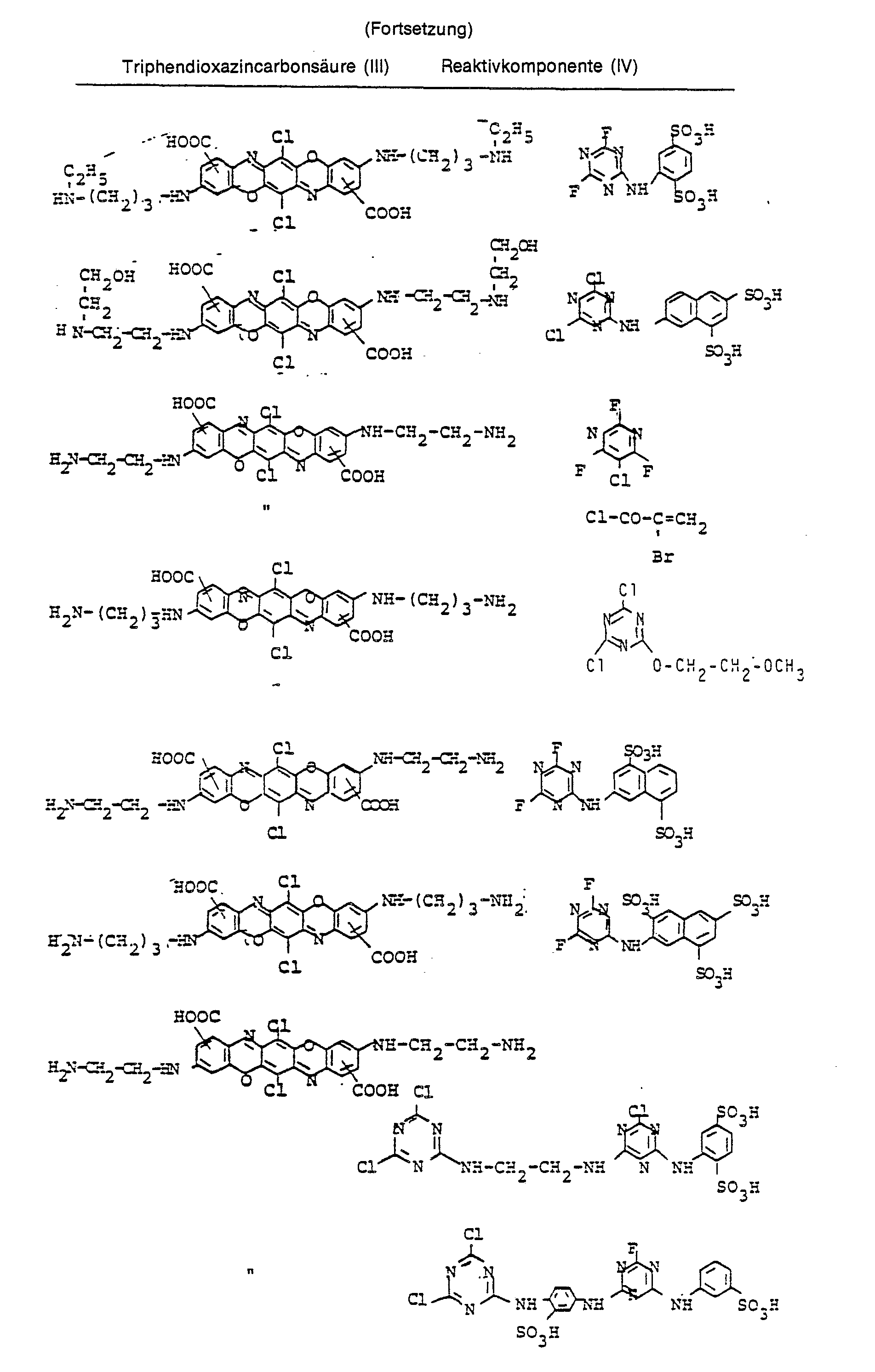

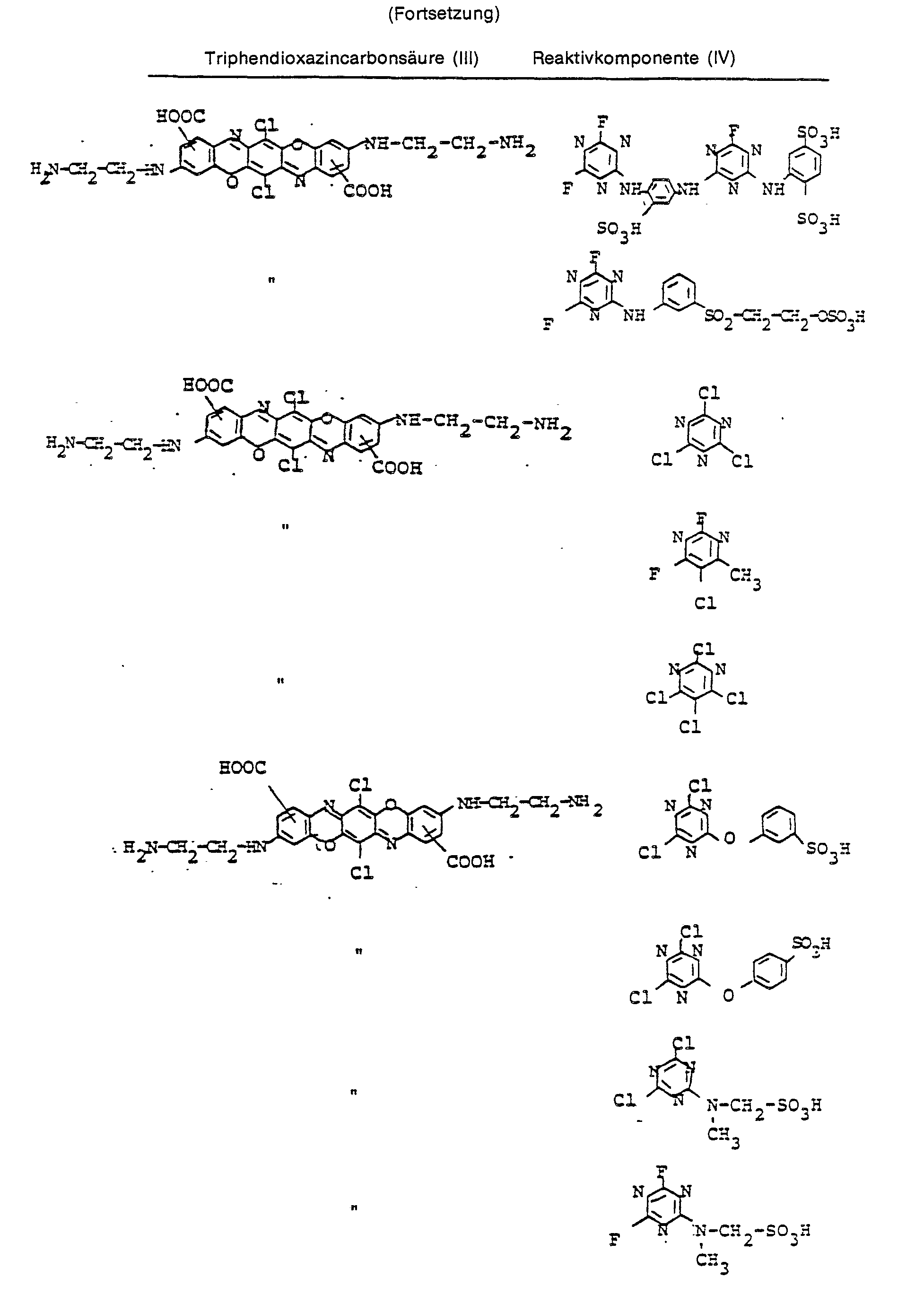

## Patentansprüche

1. Farbstoffe der Formel 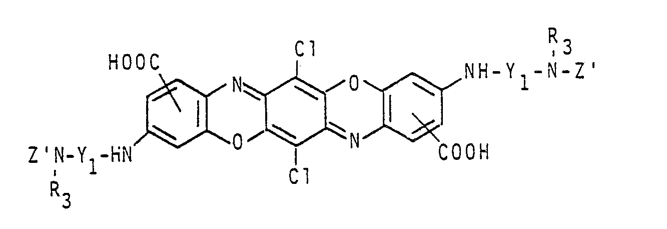 worin
Y₁ = gegebenenfalls durch 0, S, SO₂ oder N unterbrochenes C₂-C₆-Alkylen
Z = faserreaktiver Fluor- oder Chlor-1,3,5-triazinyl- oder Fluor-pyrimidinyl-Rest
R₃ = H, gegebenenfalls durch OH, COOH oder Cₗ-C₂-Alkoxy substituiertes C₁-C₄-Alkyl

2. Farbstoffe der Formel 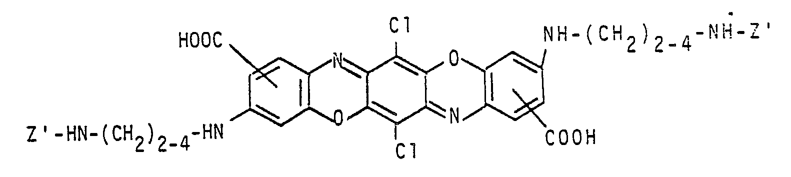 worin Z' die in Anspruch 1 angegebene Bedeutung hat.

3. Farbstoffe der Ansprüche 1-2 worin Z' = Fluor- oder Chlor-1,3,5-triazinylrest, der als weiteren Substituenten eine gegebenenfalls durch Alkyl- oder Arylreste substituierte Aminogruppe aufweist.

4. Verwendung der Farbstoffe der Ansprüche 1-3 zum Färben von hydroxyl- oder amidgruppenhaltigen Fasermaterialien.

5. Mit den Farbstoffen der Ansprüche 1-3 gefärbte hydroxyl- oder amidgruppenhaltige Fasermaterialien.

## Claims

1. Dyestuffs of the formula 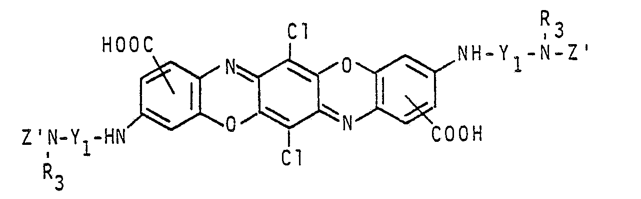 wherein
Y₁ C₂-C₆₋alkylene optionally interrupted by 0, S, S0₂ or N
Z' a fibre-reactive fluoro-1,3,5-triazinyl or chloro-1,3,5-triazinyl or fluoropyrimidinyl radical
R₃ H or C₁-C₄-alkyl which is optionally substituted by OH, COOH or C₁-C₂-alkoxy.

2. Dyestuffs of the formula 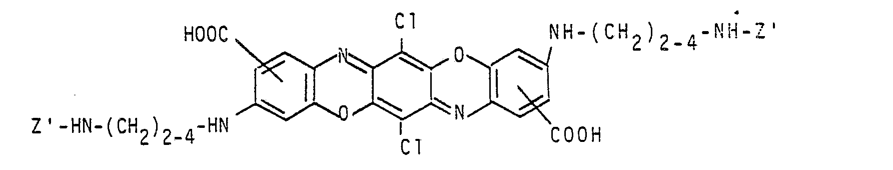 wherein Z' has the meaning given in Claim 1.

3. Dyestuffs of Claims 1 to 2, wherein Z' = a fluoro-1;3,5-triazinyl or chloro-1,3,5-triazinyl radical which has, as a further substituent, an amino group which is optionally substituted by alkyl or aryl radicals.

4. Use of the dyestuffs of Claims 1 to 3 for dyeing fibre materials containing hydroxyl groups or amide groups.

5. Fibre materials containing hydroxyl groups or amide groups which have been dyed with the dyestuffs of Claims 1 to 3.

## Revendications

1. Colorants de formule 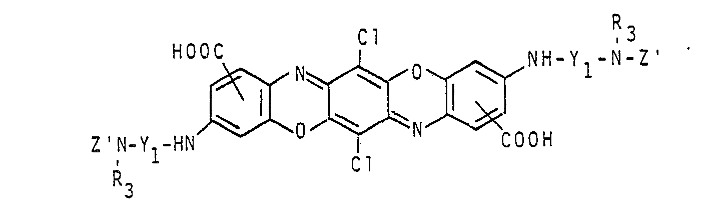 dans laquelle
Y₁ représente un groupe alkylène en C₂-C₆ éventuellement interrompu par O, S, S0₂ ou N,
Z' représente un groupe fluoro- ou chloro-1,3,5-triazinyle ou fluoropyrimidinyle réactif avec les fibres,
R₃ représente H, un groupe alkyle en C₁-C4 éventuellement substitué par OH, COOH ou un groupe alcoxy en C₁-C₂.

2. Colorants de formule 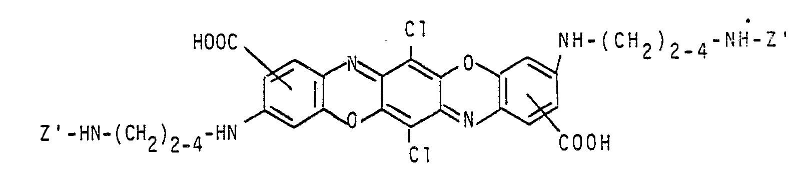 dans laquelle Z' a les significations indiquées dans la revendication 1.

3. Colorants des revendications 1 et 2, dans lesquels Z' représente un groupe fluoro- ou chloro-1,3,5-triazinyle portant en tant qu'autre substituant un groupe amino éventuellement substitué par des groupes alkyle ou aryle.

4. Utilisation des colorants des revendications 1 à 3 pour la teinture de matières fibreuses contenant des groupes hydroxy ou amide.

5. Les matières fibreuses contenant des groupes hydroxy ou amide teintes à l'aide des colorants des revendications 1 à 3.
